# EUROPEAN PATENT APPLICATION

(11) **EP 0 756 945 A1**
(43) Date of publication of application: **05.02.1997**
(21) Application number: 95870091.6
(22) Date of filing: 31.07.1995
(51) Int. Cl.: B42D 15/00

(54) **Colour copy protection of security documents**

(71) Applicant: NATIONAL BANK OF BELGIUM, 1000 Bruxelles (BE)
(72) Inventor: Salade, Marc, B-1490 Court-St-Etienne (BE)
(74) Representative: Powis de Tenbossche, Roland

(57) **Abstract**

Copy protected document, characterised in that it comprises a means combining an information or means showing a colour shift effect and an information or means showing a metallic effect, without any importance which of the two effects is underneath or above.

## Description

The present invention relates to the protection of documents, in particular security documents, against counterfeiting by copying.

The expression *"document"* as used in this text refers to any support of visible information. Thus, a document according to this specification can consist of a sheet of paper or a sheet of any other material, whether this material has an opaque, translucent of transparent character or a mixture of this forms of appearance, or can even consist of any object, which sheet or object bears any information which is detectable with the eye. It is of no importance if the final appearance of the document concerns its original substrate only (e.g. a banknote), or if the document is laminated or embedded afterwards between sheets of the same or of other materials (f.e. identity card laminated in between different layers of polyester or other synthetic material - a security document on a paper sheet whereby the security elements are protected by an overlay in synthetic material glued).

The expression *"information"* as used in this text refers to any representation, image, text, message, symbol, pattern and the like, which may be applied in visible form on a document.

The expression *"metallic"* used in this text, has to be understood as any visual effect whereby the general appearing, brilliance and gloss reminds a metal, regardless if the metallic appearance concerns a "blank metal" effect or a coloured metallic appearance due to the colour of the metal itself or obtained by applying coloured varnishes, coated layers or any other way for bringing a transparent colour shade onto the metal. It is of no importance if the metallic effect is provided by pigments obtained by grinding pure metals such as silver, gold, nickel, aluminium, copper, brass, bronze, etc., into very fine particles and generally known and used in the graphic industry as "metal pigments"; by transferring an hologram with an aluminium background whether or not an image has been etched into the metallic layer of the hologram, by transferring an image with using a metallic aspect using transfer foil, or by pigments resulting from a metal vacuum dampening or sputtering process.

Metallic pigments can be used in printing ink and depending of the particle size and characteristics of the pigments, subsequently been printed onto the substrate using printing processes such as wet or dry offset, silkscreen, intaglio, flexo, gravureprinting, etc.; or with hybrid and/or non-impact printing systems; or can be transferred onto the substrate using transfer techniques.

Under the expression *"metallic"* has also to be understood the process of vacuum dampening and/or sputtering of a metallic layer directly onto the substrate, regardless if the metallic layer has afterwards been partly etched away, leaving on the substrate a readable information with metallic characteristics.

Metallic pigments for pigmentation printing inks, being grinded metals or obtained by vacuum dampening processes are worldwide available under numerous tradenames and can be purchased from many different companies.
Metallisation by vacuum dampening on flexible substrate and demetallisation is done by different companies, generally producing basic materials for luxury packaging and for the label industry.

Depending on the nature of the substrate and the process used for producing the metallic appearance, the brilliance and gloss can vary between a mirror-clear brilliance and gloss (e.g. vacuum metallizing on plastic - foil transfer on paper) up to a more diffuse sparkling metallic look (e.g. printing directly onto rough surface of the banknote paper).

The expression *"light interference"* used in this text has to be understood as those effects, also called nacreous or pearlescent effects because of the simulation of pearly luster.
Interference pigments are available on the market in the form of very small crystal plates of appropriate thickness to produce colour by light interference. These pigments exhibit a colour play that verges on iridescence and under a given angle of reflection will allow only the observation of a single colour, whereas other colours appear under different angles of reflection, in other words these pigments show another colour of the human eye depending on the observation angle.
The preparation of such kind of pigment is described in e.g.; *"Nacreous (Pearlescent) Pigments and Interference Pigments"* by L.M. Greenstein Henry L. Mattin Laboratories, reprinted from Pigment Handbook, Vol. 1, Properties and Economics - second edition, edited by Peter A. Lewis, (1988) by permission of John Wiley and Sons Inc.
The Mearl Corporation, 41 East 42nd Street, New-York, N.Y. 100017.

The mica pigments serving as a substrate for the interference coatings, are a group of hydrous aluminium silicate minerals with platy morphology and perfect basal (micaceous) cleavage.
Details about the application of metal and/or metal oxide coatings on mica platelets are given in US-P 3,087,827 - 4,434,010 and 5,059,245 and published EP-A-45 851, EP-A-313 280, DE-A-11 65 182, DE-A-32 37 264, DE-A-38 25 702, DE-A-36 17 430 and DE-OS 41 41069. Mica platelets coated with one or more metal oxide layers for use as interference pigments are commercially available e.g. under the tradenames "Iriodine" (E. Merck Company - Darmstadt-Germany), "Flonac" (Kemira Oy, Pori - Finland), "Mearlin" (The Mearl Corporation, New York, USA) and "Paliosecure" (BASF - Ludwigshafen-Germany).

It is of no importance if the light interference effects are obtained by using more transparent pigments (e.g. "Iriodine" and "Mearllin"), or by pigments having a more pronounced own body colour (e.g. "Paliose-cure"), neither is it important if the light interference effects are brought on the substrate by a printing processes using light interference pigments in the printing ink, or if the light interference effects are applied on the substrate by a transfer operation of e.g. light interference pigments previously printed on a foiled substrate used as temporary carrier.

Counterfeiting of documents, in particular so called security documents, such as banknotes, shares, bonds, warrants, cheques, identity cards and other person identifying documents, drivers licences, airplane tickets, bank cards, credit cards, post stamps, tax stamps, visa stickers, stickers for sealing and/or saving, food bonds, discount documents, diploma's, certificates, entrance documents, lottery tickets, security stickers and other secret or highly confidential documents, constitutes a severe problem. This problem has taken an increased importance with the development of colour photocopying equipment.
In addition to the increasing quality of the colour reproductions, the number of colour copiers available on the market is steadily growing. The use of this equipment does not require special skills nor specialised technical knowledge in printing techniques and/or process. The risk that such equipment is used for counterfeiting documents, and in particular for counterfeiting banknotes, is therefore constantly growing.

In order to protect security documents against counterfeiting, security printers use different printing processes such as wet or dry offset, intaglio, screen and typographical printing, using specific colours which are printed in rainbow and cannot be obtained by a simple mixture of cyan, yellow, magenta and black; hybrid printing techniques are also used such as hot transfer for transferring foil, holograms, kinegrams, etc.

Furthermore, the paper of a security document such as e.g. banknote is generally made of 100 % cotton and is further protected by a watermark, a security thread, fluorescent fibres of different colours and length and/or by introducing different kinds of so called "planchettes" holding fluorescent, light diffraction, or other characteristics.
Screened images and patterns generally used in the ordinary printing industry are generally avoided and for this reason the design of most security documents and especially of e.g. a banknote is often completely based on images obtained by lines formed into security patterns and so called "guilloches".

Despite the mentioned security features, colour photocopying is to be considered as a danger for the counterfeiting of security documents and among those especially banknotes, even when a number of the security features cannot be reproduced or can only be reproduced with an unacceptable poor quality.
Older people, people with vision problems, less perceptive people or people under the stress of the circumstances are generally easy victims of colour photocopying counterfeited security documents

In commercial industry it is generally known that metallic aspects cannot be printed in an acceptable quality using only yellow, cyan, magenta and black pigments. For this reason, metal pigments or metallised foils are used, being respectively printed or transferred onto the substrate to give a metallic appearance to the information.

This is commonly done using different printing processes or metallized foil transfer techniques for e.g. luxury packaging and labels whereby the high quality of the metallic appearance and gloss is of a great commercial importance such as for e.g. cigarette boxes, cosmetics, perfumes, etc. Another technique frequently used is vacuum dampening a thin aluminium layer onto the substrate such as for e.g. high quality beer labels, in order to become an even more shiny metallic appearance. In this case, coloured metallic effects and shades are obtained by coating or overprinting the dampened aluminium layer with a transparent coloured varnish or lacquer. After applying a surface varnish or coating, further graphic images are printed on the metallic surface using different printing processes related to the use of the final product.

It is obvious that, as it is proved by the daily practice of the commercial graphic industry, if a high quality metallic aspect cannot be obtained by using the basic colour pigments (cyan, yellow, magenta and black), it is even so impossible for a colour photocopying machines which are using the same basic pigments as the printing process to reproduce a metallic effect of a document in a good acceptable quality.

Therefore, on security documents metallised foils are sometimes used, whereby, besides an eventual integrated light diffraction pattern or holographic image, the metallic appearance give a further protection against counterfeiting by colour photocopy.
However, in some cases it has been stated that a metallic information, e.g. a silver metallic information - although repeated adjustments of the colour output of the colour photocopier are required and although the final copy result is still strongly depending on the nature of the other information and colours on the document - could be reproduced in truly still a poor quality being in most cases a grey/blue colour shade, but obviously sufficient enough for circulating the counterfeited document into the hands of older people or people with vision problems. This is especially the case when it concerns security documents (e.g. banknotes) which are submitted to crumpling and wear during the circulation, causing a sensible loss of the gloss and brilliance of the metallic appearance of the information, reason why it sometimes becomes difficult for unaware vision-handicapped people to see the difference between original and colour counterfeited documents.

Depending on the appearance and the simplicity of the form of the metallic information on the document, in some cases, it has been stated that further fraud possibilities consist in colour photocopying the original document and applying afterwards a metallic effect onto the copy using therefore commercially available and generally spread thin metal foils using glue or transferring the metal effects from commercial transfer foils by using an iron or a small metal foil transfer machine as generally used in bookbinding shops for decorating covers of books.

It has furthermore been stated that a print of a metal pigment directly onto a 100 % cotton made banknote paper, because of the surface structure, porosity and roughness of this paper, regardless the used printing process, will never have the same brilliance, gloss and metallic appearance as when the same print should be executed on a paper with a coated surface. Modifying the surface structure of the paper before printing, by coating, printing a varnish, lacquer deposition, etc., results in a much better metallic effect of the metal link used for printing the information.

In case the metallic information is brought onto the paper using metal foil transfer processes, the metallic effect is very little influenced by the paper surface structure and shows a very shiny, brilliant metallic surface. However, metal foil transfer can be considered as a form of a wax or glue adhesion process using heat and pressure for transferring an extremely thin layer or metallic material, holding on the rough substrate by the very adhesive layer. Under public circulation circumstances the metallic effect seems to be rather sensible to crumpling and wear.
When the information is put on a plastic substrate, whether this substrate is opaque, translucent or transparent, the metallic effect is sensibly better because of the very flat surface of the substrate. However, the same wear tendencies remain if the metal effects of the information on the surface of the documents are not protected against wear by a protecting layer.
In some cases, in a following step, some documents on plastic substrate will be laminated between two or more polymer layers or sheets (e.g. laminated identity cards, bank cards, etc.) whereby the metallic effects are sometimes increased due to the pressure and heat used during the laminating process (e.g. printed metallic effects) and the laminating foil is protecting the metallic effects against surface wear. In addition, this kind of documents are, because of their seizes, nature and use, rarely or not submitted to folding and/or crumpling. It is clear that the conservation of the metallic effects on this documents is much better, even after a long circulation in public.

The present invention provides a method for obtaining copy protected documents based on the combination or superposition of metallic effects together with light interference effects preventing through this combination the possibility to be reproduced by a colour copying machine. This combination consists of at least two preferably superposed information holding layers whereby one layer shows light interference effects and one layer presents a metallic effect. As the light interference layer has a translucent character and the metallic layer generally has a opaque character, it is of no importance which of those two layers is on top or underneath. The information of the upper layer may not cover completely the layer un-derneath which forms the only limitation when using the combination on an opaque substrate. On a transparent substrate the previously named limit is of no importance as the pattern can be observed from both sides of the document.

The present invention is based on the characteristics that some properties of metallic effects such as its maximum gloss and brilliance can best be observed under a specific observation angle while on the other hand the at least two colours of light interference have to be observed under at least two different observation angles whereby the optimum angles for observing the metallic effects and the observation angles for the colours interference effects are different from each other and different from the fixed "reading" angle of the colour copier reading device of which the copying angle is generally 90° and formed by the information containing light rays and the copying material.
Because of the differences in the observation angles of the different components of the information, adjusting the colour copier to improve the reproduced colour of a specific part of the pattern lead to further loss of copy quality in the other parts of the pattern.

It has been found that an information on a security document, having a metallic effect in colour, brilliance and gloss is reproduced by a photocopying machine as a colour such as brown, a brown/yellow, a grey, a dirty blue or a green/blue colour shade depending on the adjustments of the colour copying machine and on the colour of the metallic pigment (e.g. white metals such as aluminium - yellowish metals such as brass - reddish metals such as copper or bronze, etc.). As the copier can only read the colour and does only have the four basic colours for reproducing the original document, the reproduced colour will be influenced by the brightness and gloss of the metallic effects holding information. Contrary to the human eye, the colour copier cannot make the distinction between the metallic gloss and brilliance of a metal and the colour of the metal itself.
On the other hand, a colour copying machine can only "read" the colours on an original document in one fixed angle. As this angle is completely different from the observation angles of the minimum two colours of the light interference effects, the colour copier will reproduce a mixture of the interference colours such as e.g. an information having a yellow and a blue (complementary) colour by light interference will be reproduced as a greenish shade, being the subtractive mixture of both interference colours. Respecting the rainbow printing and the fine line technique common for the design of security documents, the combination of the metal effects and of the light interference effects are reproduced by the colour copier in such a poor quality being very difficult to be overlooked when controlling documents on authenticity. The fraudulent use of commercial available products to corrupt the combination is avoided due to the maintained use of the design and printing techniques common for security documents and not spread on the market.

Characteristics and details of copy protected documents of the invention are given in the attached claims.

The document of the invention can comprise an opaque or transparent or translucent substrate provided with a means combining an information or means showing a colour shift effect and an information or means showing a metallic effect.

In an embodiment of the document of the invention using a transparent or translucent substrate, the upper information holding layer covers completely the underneath or bottom information layer. For example, the document has two opposite faces, one face carrying a layer showing light interference effects while the opposite face carries a layer having a metallic effect.

Preferably one of the informations is in the form of a fine guilloche structure and/or micro lettering and/or very small text, while the other information is in the form of a solid or almost solid surface or in the form of a layer, a face of which has such a surface that it covers or is provided with a fine guilloche structure and/or micro lettering and/or very small text of the said first information.

According to a detail of an embodiment, a superposition of informations showing a colour shift effect and a metallic effect is put on top or on a face of a security feature previously applied on the substrate.

This can be done by using a cold or hot transfer technique, such as e.g. a transferred metal foil, whether or not showing gratings or light diffraction effects, a pigment transfer foil, or a hologram or kinegram whether or not the hologram or kinegram has a metallic opaque, a semi transparent or a transparent appearance to the eye, whether or not parts of the metallic reflection layer of the hologram has been etched or not.

According to a detail of another embodiment, it comprises a metallic opaque, semi transparent or transparent appearance of a hologram or kinegram, the hologram or kinegram being sandwiched in between the information showing a colour shift effect and the information showing a metallic effect. Preferably, the information or means showing the colour shift effect and metallic effect has an appropriate design. The metallic and/or colour shift information is possibly overflowing onto the surface of the substrate itself without importance which effect is underneath or on top of the hologram or kinegram.

The document of the invention can be manufactured according to various methods. For example, the metallic information or parts of these and/or the colour shift information or parts of these are obtained by a printing process.

However, possibly the light interference information and/or the metallic informations or parts of one or of the two informations in superposition have been obtained by coating processes, hot or cold transfer processes, vacuum deposition or sputtering.

In a further embodiment, the metallic information or parts of this, or the colour shift information or parts of this are embedded in the substrate, the metallic or the light interference information being brought onto it by using printing process, hot or cold transfer or coating processes.

An information with metallic effects, overprinted in wet offset using a very fine line guilloche pattern with varying line thicknesses and distances between de lines between 6 and 40 microns, or using a silkscreen, flexographical or typographical printing process with process appropriate line thicknesses for the overprint information, using printing inks for the overprint having the same colours in which the colour copier reproduces the metallic pattern, unable the colour copier to produce a copy of this combined information with an acceptable quality. Overprinting the same metallic effects holding already an information but using light interference pigments for the overprint pattern, cannot be reproduced by a colour copier.

An information showing light interference effects which is overprinted in wet offset printing, using a very fine line guilloche pattern as overprint information with varying line thicknesses and distances between the lines laying between 6 and 40 microns, additionally using rainbow printing whereby one of the rainbow colours is chosen in function of the reproduction colours of the copier of the interference colours underneath and the other rainbow colour is an ink with metallic effects unable the colour copier to produce quality acceptable copies of the total information.

If the rainbow colours for this overprint are composed of an ink with metallic effects and a second ink identical in colour to one of the colours of the light interference pigments underneath, the copier is not able to produce a quality acceptable copy of the document.

A metallic pigmented ink used in offset-rainbow printing together with an offset printable light interference pigment (f.e. offset printable Iriodine of the Merck company), whereby the offset print is done on top of a previous printed metallic effect similar in colour and/or onto a metallic underneath, and/or to a light interference layer underneath, regardless the roughness of e.g. banknote paper, the overprint will have a more brilliant metallic and glossy character than the ink layer underneath due to the paper porosity decreasing effects of the first ink layer.

If a silkscreen printing process is used for printing the metallic or light interference effects underneath, the porosity of the paper will be strongly decreased due to the thickness of the ink layer of the silkscreen printing process, resulting in a higher brilliance and metallic gloss of the above wet offset printed layer.

### Example 1

A light interference pigment has been silk-screen printed directly onto 100 % cotton made banknote paper as underneath information. This pigment shows, related to the observation angle respectively a gold/yellow and a blue/grey colour.
A design has been used consisting of solid surfaces combined with fine guilloche lines having process appropriate line thicknesses and distances.
The print has been done using an Estal monofilament polyester screen mesh 77, having a mesh opening of 80 microns - thread diameter of 50 microns - fabric thickness of 80 microns.
A direct emulsion stencil as well as an indirect capillary film stencil were used to copy the print image on the screen.

Several commercial basic inks were used such as an ink based on nitrocellulose ether e.g. Unicell C 900 (Unico - Belgium), as well as a commercial ink generally used for laminated PVC bank cards such as e.g. Marabu FXS-N Spezialbinder (Marabout company - Germany), as well as inks generally used for printing stickers on plastic substrate foreseen for vehicle decoration because of the solvent resistance of the ink layer such as e.g. Marastar SRL series (Marabu company - Germany). All this inks are air drying and can be overprinted in silkscreen and in wet and/or dry offset.

As pigment, different concentrations between 15 and 30 % (weight mixture) were used of the light interference pigment "Paliosecure Gelb FD 4211" (BASF - Germany) which is a rather new light interference pigment known in the world of security printers.
The overprint of the metallic effect was executed respectively in wet offset using different silver coloured metal ink foreseen for printing on non-absorbing surfaces e.g. Silver Van Son - code 10382 - Sonaprint series - Van Son company - The Netherlands) as well as in silkscreen using the same basic inks as the ink layer underneath for this overprint using aluminium pigments in the inks.
The printing in wet offset, several commercially available wet offset printing plates were used such as Aluminium Polychrome GP 6 plates and (trimetallic ??) plates. The wet offset printing has been done on a GTO Heidelber offset press. The silkscreen printing has been done respectively on a SPS and on a SIAS sheet-fed screen press, being presses generally known in the printing industry.

### Example 2

The same print operations as described in example 1 were executed replacing however the yellow light interference pigments by a blue light interference pigment "Paliosecure blue - FD 4187" (BAS - Germany).
Basis inks, pigment concentrations, overprint processes and products and the used machinery all kept identical.

### Example 3

Transparent substrate such as e.g. polyester, polyethylene, polystyrene, etc. have been silkscreen printed using substrate appropriate commercial inks available on the market. In this inks several light interference pigments have been used such as a blue light interference pigment ("Paliosecure FD 4187" - BASF - Germany), a green light interference pigment ("Paliosecure EC 1407" - BASF - Germany, and "Paliosecure FD 4188" - BASF - Germany) and a yellow light interference pigment ("Paliosecure FD 4211" - BASF - Germany) as well as different "Iriodine" pigments (Merck - Germany).
For this silkscreen print screen mesh, pigment concentrations and copying circumstances were kept identical as mentioned in example 1 here above.

As overprint colours in wet offset a metallic ink (Silver Van Son - code 10382 - Sonaprint series) was used for printing on top of the light interference ink layer. The metallic ink was put in rainbow with respectively blue, orange, brownish/red and greyish/green coloured ink, being colours in which a metallic ink is produced by a colour copier according to different colour adjustments of the copier.
As printing image a fine line guilloche pattern was used, containing micro lettering and very small text. Printing machinery and plates were kept identical as mentioned in example 1.

On a part of the transparent substrate, on the back side, a print run was done in silkscreen printing using a metallic silkscreen ink having a goldish colour. Another part of the run was printed with an ink showing a brilliant aluminium colour.
Both printing were executed in order to have opaque parts on the transparent substrate.
The design of this printed image shows solid surfaces and fine lines having process appropriate thickness and distance.
On top of this print, on a part of the run, an overprinted directly onto the metallic ink was done in wet offset using rainbow printing whereby at least one of the used colours was a metallic ink, another colour being a colour in which the metallic ink is reproduced by the colour copier.
As printing image a guilloche line pattern was used presenting micro lettering in the guilloche pattern.
For a part of the run a further overprint has been done in silkscreen using respectively one of the light interference pigment as mentioned here above in example 3.

In a next step, in wet offset, using the same print image, a second overprint was done on top of the silkscreen printed light interference pigments using different colours and metallic pigmented inks put in rainbow.

### Example 4

A paper foreseen of a brilliant vacuum dampened aluminium layer foreseen of a print accepting varnish layer on its surface (Alupa product - Genk - Belgium) has been overprinted in silkscreen whereby the ink was pigmented with the in example 3 mentioned light interference pigments and overprinted afterwards in wet offset using as well metallic inks as coloured inks. The offset printed information was partly overlapping the light interference information and partly printed directly onto the substrate.

### Example 5

The prints obtained in the examples 1, 2, 3 and 4 have been photocopied using standard commercial colour copiers.
In particular use was made of a Canon CLC 500 copy machine. By using the colour adjustment possibilities of the copier, attempts have been done to copy the prints at the highest possible quality.

None of the test prints could be reproduced by the colour copier in an acceptable quality. The copies of example 1 showed a greenish shade - completely different from the colour of the light interference pigment while the silver coloured metallic effects of the overprint were colour copied in different shades between grey and blue/grey according to the adjustments of the copier. Because of the nature of the toners of the colour copier, light interference effects cannot be copied.
Any attempt to improve one of the reproduced colours decreased sensibly the reproduction colour of the rest of the pattern and made the total even more unacceptable. In this respect, in order to copy as close as possible e.g. the yellow colour of the light interference pigments, attempts were made to modify the greenish colour shade of the colour copied yellow light interference pigments into a yellow. This modified at the same time the grey copied colour of the metallic ink into a yellow/green colour shade followed, by further adjustments, by missing any reproduction of the metallic inks on the copy.

Adjusting the machine to bring out an acceptable colour shade for the metallic information destroyed totally every resemblance of the copied colour with any of the colours of the light interference pigments.

Example 2 could only be copied as a dirty blue for the light interference pigments whereby any acceptable colour shade was missing for the metallic effects of the information.
Machine adjustments could improve the shade of one part of the information, but were destroying other parts of the information.

Colour copying the examples 3 and 4 completely impossible. The light interference effects in the transparent parts of the substrate of example 3, are reproduced in a colour to be situated between the initial and the complementary colour of the light interference pigments.
In this areas the copier cannot make the difference between the light interference pigments on the front and these on the back side of the substrate and makes an own dirty indefinable colour mixture.
The metallic effects disappear completely in this mixture or are reproduced as an indefinable colour shade being far away of any resemblance to any metallic look. In those prints where light interference pigments are on top of a metal layer underneath, the copier reproduces an indefinable colour whereby the reproduction colour is strongly influenced by the colour, brilliance and gloss of the metallic effects underneath, which are acting as a mirror.

## Claims

1. Copy protected document, characterised in that it comprises a means combining an information or means showing a colour shift effect and an information or means showing a metallic effect.

2. Copy protected document of claim 1, characterised in that it comprises at least two information holding layers, whereby one layer shows light interference effects and one layer presents a metallic effect.

3. Copy protected document of claim 2, characterised in that it comprises two superposed information holding layers.

4. Copy protected document of claim 3, characterised in that it comprises two superposed information holding layers, the upper information holding layer not covering completely the underneath or bottom information holding layer.

5. Copy protected document according to anyone of the claims 1 to 4, characterised in that it comprises an opaque substrate provided with a means combining an information or means showing a colour shift effect and an information or means showing a metallic effect.

6. Copy protected document according to anyone of the claims 1 to 4, characterised in that it comprises an transparent of translucent substrate provided with a means combining an information or means showing a colour shift effect and an information or means showing a metallic effect.

7. Copy protected document according to claim 6, characterised in that the upper information holding layer covers completely the underneath or bottom information layer.

8. Copy protected document according to claim 6 or 7, characterised in that the document has two opposite faces, one face carrying a layer showing light interference effects while the opposite face carries a layer having a metallic effect.

9. Copy protected document according to one of the claims 1 to 8, characterised in that one of the informations is in the form of a fine guilloche structure and/or micro lettering and/or very small text.

10. Copy protected document of claim 9, characterised in that one of the information is in the form of a solid or almost solid surface.

11. Copy protected document of claim 9, characterised in that one of the informations is in the form of a fine guilloche structure and/or micro lettering and/or very small text, while the other information is in the form of a layer, a face of which having a surface so as to cover or to be provided with a fine guilloche structure and/or micro lettering and/or very small text of the said first information.

12. Copy protected document according to one of the claims 1 to 11, characterised in that a superposition of informations showing a colour shift effect and a metallic effect is put on top or on a face of a security feature previously applied on the substrate.

13. Copy protected document according to one of the claims 1 to 12, characterised in that it comprises a metallic opaque, semi transparent or transparent appearance of a hologram or kinegram, the hologram or kinegram being sandwiched in between the information showing a colour shift effect and the information showing a metallic effect.

14. Copy protected document according to one of the claims 1 to 13, characterised in that the metallic information or parts of these and/or the colour shift information or parts of these are obtained by a printing process.

15. Copy protected document according to one of the claims 1 to 13, characterised in that the light interference information and/or the metallic informations or parts of one or of the two informations in superposition have been obtained by coating processes, hot or cold transfer processes, vacuum deposition or sputtering.

16. Copy protected document according to one of the claims 1 to 13, characterised in that it comprises a substrate and in that the metallic information or parts of this, or the colour shift information or parts of this are embedded in the substrate, the metallic or the light interference information being brought onto it by using printing process, hot or cold transfer or coating processes.
